# EUROPEAN PATENT APPLICATION

(11) **EP 3 373 215 A1**
(43) Date of publication of application: **12.09.2018**
(21) Application number: 17159820.4
(22) Date of filing: 08.03.2017
(51) Int. Cl.: G06Q 10/06, G05B 19/418

(54) **SCHEDULING SYSTEM AND METHOD FOR INDUSTRIAL PROCESS**

(71) Applicant: ABB Schweiz AG, 5400 Baden (CH)
(72) Inventor: Bauer, Reinhard, 69126 Heidelberg (DE); Gallestey Alvarez, Eduardo, 5507 Mellingen (CH); Harjunkoski, Iiro, 69469 Weinheim (DE); Hollender, Martin, 69221 Dossenheim (DE)
(74) Representative: ABB Patent Attorneys

(57) **Abstract**

A scheduling system 20 for scheduling an industrial process is provided. The process comprises a plurality of tasks carried out by process equipment 10 of an industrial system.

The scheduling system comprises a database 30 for storing process information including task status information regarding the tasks; a first interface 42 for receiving a task status message from the process equipment 10 relating to at least one of the tasks; an auto-correction module 44 configured for checking at least one of the received task status message and the stored process information for an inconsistent data entry, and for performing a correction using a correction rule; and an updater module 46 for updating the process information stored in the database based on the task status message.

## Description

### Technical background:

Embodiments of the invention relate to a scheduling system for scheduling an industrial process. Such a scheduling system may be connected to or provided in a Manufacturing Execution System (MES). Embodiments also relate to a Manufacturing execution system or Model Predictive Control system connected to the scheduling system. Further embodiments relate to a method of scheduling an industrial process.

Scheduling solutions have become widespread in many industrial environments such as production processes and the like. Production scheduling is typically done in a hierarchical fashion, in a top-down manner: The enterprise resource planning system (ERP, level 4) hands down concrete production orders along with additional information (such as due dates, amounts to be produced, ...) to the manufacturing execution system (MES, level 3). On level 3, the scheduling task is performed, i.e. it is decided when to perform which production step/task and using which resources. Then the production schedule is dispatched to the plant floor and used as a base to steer the control on level 2. Thus, scheduling systems are mostly, but not necessarily located on level 3.

Standard scheduling solutions work rather well and for many standard industrial applications, and a number of technical tools have been established that create good offline production schedules. However, in real industrial operations many problems occur that are not foreseeable. For example, unexpected disruptions may happen because of machine breakdown, illness of human operators, unplanned urgent changes in the production targets, or wrong estimates on duration or yield of a given production step. These real-time changes are not covered by the existing offline schedule. Another issue is that communication towards the central planning entity is distorted and not all necessary information is available and up-to-date at the scheduling system.

In typical scheduling systems, these situations are solved by manual re-scheduling through an operator, or by plainly neglecting the real-time changes in scheduling. However, this may lead to a suboptimal schedule and hence to suboptimal plant operations. Also, it remains a matter of luck whether an imperfect schedule, e.g., due to missing or outdated information, is corrected.

For some applications, re-scheduling algorithms exist that can adapt to outdated schedules. Whenever a change in the system is reported, a re-scheduling algorithm is called. However, also these re-scheduling algorithms do not solve all of the above problems.

### Summary of the invention:

In view of the above, a scheduling system according to claim 1, and a method according to claim 10 are provided.

According to an aspect, a scheduling system for scheduling an industrial process is provided. The process comprises a plurality of tasks carried out by process equipment of an industrial system. The scheduling system comprises a database for storing process information including task status information regarding the tasks; a first interface for receiving a task status message from the process equipment relating to at least one of the tasks; an auto-correction module configured for performing a correction (correcting a correction data using a correction rule, the correction data being a data of at least one of the received task status message and the stored process information); and an updater module for updating the process information stored in the database based on the task status message.

According to a preferred aspect, the auto-correction module is configured for checking at least one of the received task status message and the stored process information for an inconsistent data entry, and for performing a correction if an inconsistent data entry is detected (correcting a correction data using a correction rule, the correction data being a data of at least one of the received task status message and the stored process information).

According to a further aspect, a method of scheduling such an industrial process is provided. The method comprises receiving a task status message from the process equipment relating to at least one of the tasks; correcting a correction data using a correction rule, the correction data being a data of at least one of the received task status message and the stored process information; updating the stored process information based on the task status message; and computing an updated schedule for the industrial process based on the updated process information.

According to a preferred aspect, the method comprises checking at least one of the received task status message and the stored process information for an inconsistent data entry; and correcting, if an inconsistent data entry is detected, a correction data using a correction rule, the correction data being a data of at least one of the received task status message and the stored process information; updating the stored process information based on the task status message.

An advantage is that due to the auto-correction module, scheduling is enabled even in the presence of incomplete and/or outdated process information; and also the quality of the obtained schedule may be improved. Another advantage is that due to the updater module and the use of a single database, the scheduling system allows using up-to-date data in a consistent manner. The scheduler according to aspects of the invention may be operated in a closed-loop operation. Thereby, it is ensured that the schedule is reactive to real-time events and changes in a production scheduling system, in addition to being able to cope with outdated or unknown information, e.g., because of communication distortions. Thereby, the schedule can be adapted to changed production or process conditions.

Further advantages, features, aspects and details that can be combined with embodiments described herein are evident from the dependent claims, the description and the drawings.

### Brief description of the Figures:

The details will be described in the following with reference to the figures, wherein
Fig. 1 is a schematic illustration of a scheduling system according to an embodiment of the invention;
Fig. 2 is a flow diagram of a scheduling method according to an embodiment of the invention;
Fig. 3 is a schematic illustration of a correction rule for a scheduling system according to an embodiment of the invention; and
Figs. 4a and 4b are schematic illustrations of another correction rule for a scheduling system according to an embodiment of the invention.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

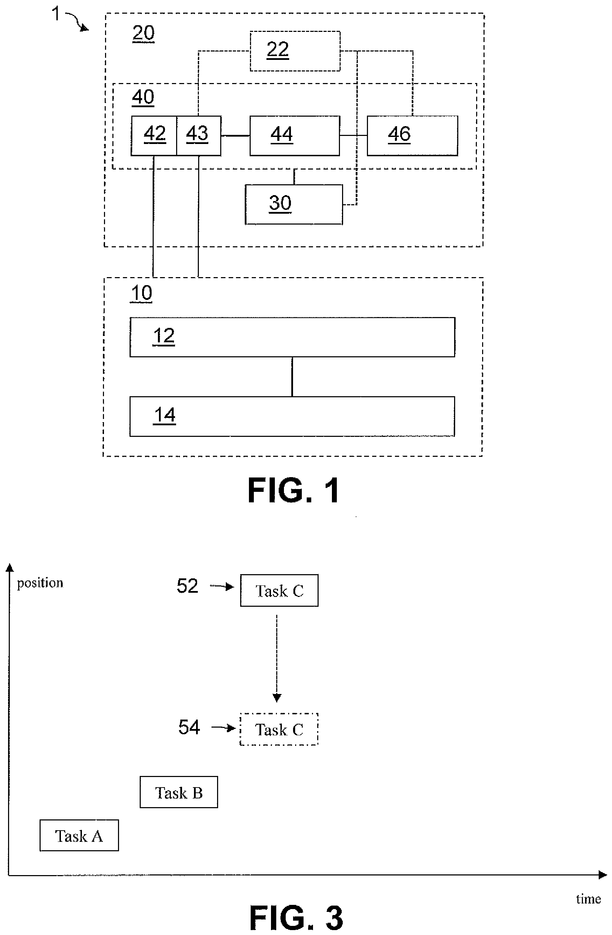

With reference to Fig. 1, an industrial system with a scheduling system 20 according to an embodiment of the invention is described. The industrial system also comprises a process equipment 10 including a process device 14 adapted for carrying out a plurality of tasks of the industrial system, and a process control device 12 for monitoring and/or controlling the process device 14. The process device 14 may, for example, be a plant device in a production plant, a plant sensor or the like. The process control device 12 may be a level 2 device, for example a PLC, SCADA device or the like. The process control device 12 may also include an interface for input of task status information by a human operator. Although only one process control device 12 and process device 14 are shown, the process device 14 or process control device 12 may also represent a plurality of such devices 14 and/or 12. Each process device 14 of group of process devices 14 may be controlled by an individual process control device 12, or by a common process control device 12. The sequence of the plurality of tasks is also referred to as the industrial process.

The scheduling system 20 is adapted for scheduling the industrial process carried out by the process equipment 10. To this purpose, the scheduling system 20 is able to communicate with the process equipment 10, more precisely with the control device 12. This communication task is performed via an uplink interface 42 and a downlink interface 43 (optional) of the scheduling system 20. The uplink interface (first interface) 42 is able to receive information from the process equipment 10 about its status and changes; this information relates the tasks and is herein referred to as task status message. Thus, a task status message may include information about the current state of the system, e.g., from measurements, machine feedback or input given by a worker or operator to an electronic system. Herein, a message may be any communicated data. In the following examples, the messages are described as discrete packages, but the message may also be received in a continuous manner. The downlink interface (second interface) 43 is able to send information to the process equipment 10, e.g. in order to communicate changes in the schedule to the process equipment 10. The uplink and downlink interfaces may be implemented by any known method, such as a digital bus or network, and the uplink and downlink interfaces 42, 43 may be integrated in a single hardware interface. As an example, the uplink and downlink interfaces 42, 43 may be implemented as a TCP/IP interface, optionally as a Wireless Lan interface.

The scheduling system 20 further has a central database 30 for storing all relevant information regarding the process equipment and tasks; this information is also referred to as task status information. The scheduling system 20 updates the database 30 (more precisely, the process information stored in the database 30) when a new task status message is received from the uplink interface 42. This task is performed by an updater module 46.

In some cases the received task status message and/or the stored process information may be erroneous, missing or outdated. Generally, such a situation is described herein as an inconsistent data entry (for example an error or anomaly in the received task status message and/or in the stored process information). Reasons for such an inconsistent data entry are various and include disturbed communication within the process equipment 10 or between the process equipment 10 and the uplink interface 42; not fully compatible or not fully configured process equipment 10; or other restrictions regarding the process equipment 10. This inconsistent data can lead to serious errors or at least suboptimal results in scheduling and plant operation.

In order to reduce the risk of inconsistent data, the scheduling system 20 has an auto-correction module 44. The auto-correction module 44 is configured for checking the received task status messages and the stored process information for inconsistent data entries. If an inconsistent data entry is detected, the auto-correction module 44 has a correction rule for generating a corrected data entry in which the inconsistency is removed. This checking is optional; in an alternative embodiment the auto-correction rule may be applied irrespective of such a checking. Then, the auto-correction rule may be adapted such that consistent data entries are not corrected in a significant manner.

The entry to be corrected is also referred to as the correction data. This can be an entry of the received task status message and/or of the stored process information. Thus, by correcting the correction data (e.g., replacing the inconsistent data entry in the correction data by the corrected data entry), the inconsistency can be eliminated. The corrected data entry is very likely - at least statistically - a closer representation of the actual situation of the process equipment 10 and is therefore able to improve the overall scheduling result.

The auto-correction module 44 may perform the detecting / correcting work at a number of time points, e.g., at any of the following:
- The auto-correction module 44 may correct inconsistent data in the received task status message before the updater module 46 updates the database 30;
- The auto-correction module 44 may correct inconsistent data in the stored process information before the updater module 46 updates the database;
- The auto-correction module 44 may correct inconsistent data in the stored process information after the updater module 46 has updated the database.

The uplink and optional downlink interfaces 42, 43, the auto-correction module 44 and the updater module 46 are collectively also referred to as the I/O module 40 of the scheduling system 20.

The scheduling system 20 further comprises a scheduler module 22 for scheduling the industrial process based on the process information stored in the database 30. The scheduling system 20 including the scheduler module 22 is adapted for running in a closed loop while the industrial process is being carried out. Thus, whenever the process information has been updated by the updater module 44 (and corrected by the auto-correction module 46 as described above, if necessary), the scheduler module 22 re-schedules the industrial process based on the updated process information. The re-scheduling may be limited to a check if an updated scheduling is necessary, and updating the schedule only if necessary. Thereby, the re-scheduling is carried out in a real-time manner, i.e., changes in the process conditions are automatically taken into account while the process is being carried out and fed into the updated schedule. The updated schedule is then transmitted to the process equipment using the downlink interface 43.

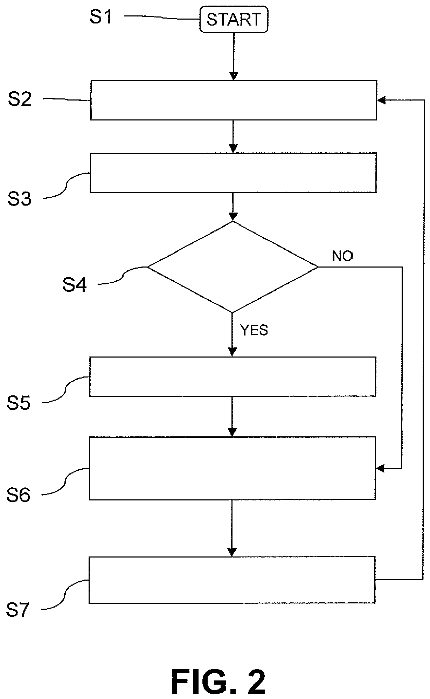

Next, with reference to Fig. 2, the method according to the closed-loop operation of the scheduling system 20 and its scheduler module 22 are described. After the method has been started (step S1), the closed loop comprises the following steps:
- A receiving step S2 of receiving, by the uplink interface 42, a task status message from the process equipment 10 relating to at least one of the tasks;
- A checking step S3 of checking, by the auto-correction module 44, at least one of the received task status message and the stored process information for an inconsistent data entry. This check is optional as already mentioned above. Also, the check may be performed implicitly, e.g., by catching an error or interrupt signal resulting from an inconsistent data entry.

The next step S5 depends on the outcome of the checking and is only carried out if an inconsistent data entry is detected (branch "yes" of conditional step S4). Otherwise, the next step S5 is omitted (branch "no" of conditional step S4).
- If an inconsistent data entry is detected (branch "yes" of conditional step S4), a correcting step S5 of correcting the correction data using the correction rule is carried out;
- An updating step S6 of updating the stored process information based on the task status message; and
- A re-scheduling step S7 of computing an updated schedule for the industrial process based on the updated process information.

Further details regarding these steps are described above with reference to Fig. 1 and hereinafter. In particular, while the steps S3 to S5 are performed in the order shown, the updating step S6 may be performed in any order with respect to these steps, as described above. Also, the re-scheduling step S7 may be limited to a check if an updated scheduling is necessary as described above.

Next, details of the auto-correction module and the correction rule are described. With reference to Fig. 3, an example of a check for an inconsistent data entry and a correction rule are described. In this example, the relevant data entries relate to the positions of a process device. For previous tasks A and B, the positions have been received as indicated in Fig. 3 and have been stored as stored process information in the database 30. Then, a task status message 52 for a subsequent task C is received, indicating a position as referenced by reference sign 52. The auto-correction module determines that the position is out of a range with respect to the previous position of Task B and is therefore inconsistent. Therefore, the auto-correction module identifies the position of Task C as a correction data, and applies an auto-correction rule in which a corrected data entry 54 for the position of task C is generated. In this example, the auto-correction rule generates the position of task C as a linear interpolation between the positions of previous two tasks A and B. In a variant, a possibly weighted linear or higher-order interpolation based on the positions of more than two previous tasks is possible as well. The position of Task C is then corrected using this corrected data entry, either in the status message or in the stored process information in the database 30.

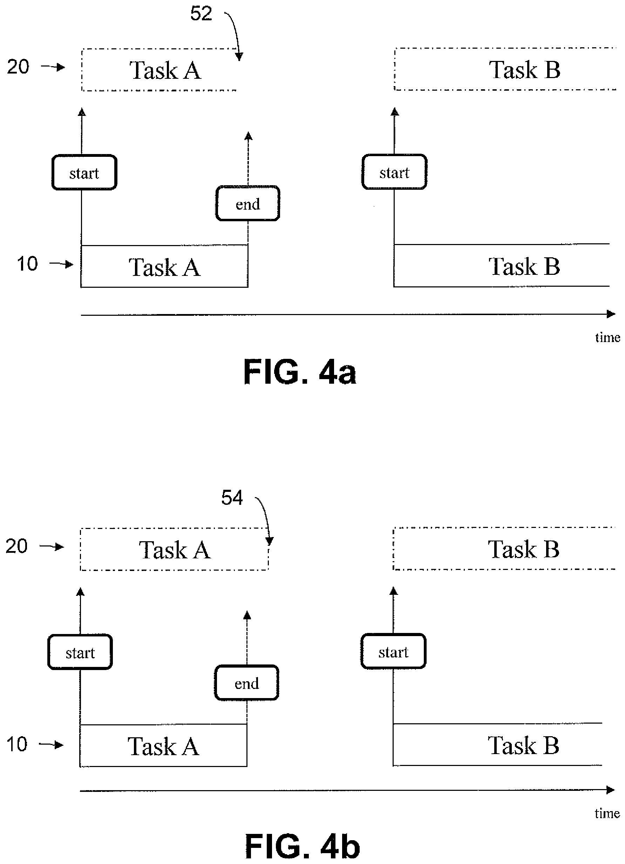

A further example of a check for an inconsistent data entry and a correction rule are described with reference to Figs. 4a and 4b. In this example, the process equipment 10 performs two tasks A and B, wherein task B can only be performed after completion of task A. In this example, the process equipment 10 sends task status messages for the start and end of each process to the scheduling system 20 (more precisely, to the uplink interface 42 shown in Fig. 1). However, due to a communication failure the task status message signalling the end of process A is lost and does not reach the scheduling system 20. Accordingly, the end of process A is not recorded in the database, resulting in an incorrect stored process information 52 in the database representing the task A as unfinished.

When the task status message signalling the start of process B is received by the scheduling system 20, the auto-correction module detects an inconsistency due to the unfinished task A. The auto-correction module thus identifies the end status and/or ending time of Task A as a correction data, and applies an auto-correction rule in which a corrected data entry 54 for this correction data is generated as indicated in Fig. 4b. In this example, the ending time is generated according to a default duration of task A. The end status and ending time of Task A is then corrected using this corrected data entry, either in the status message or in the stored process information in the database 30.

The scheduling system and other aspects of the present invention can be advantageously realized in industrial environments prone to uncontrolled errors, either in the process itself or in the communication. This includes any industrial process carried out in an outdoor environment and/or using natural resources. This also includes any industrial process using wireless or otherwise noise-prone communication channels, and/or inhomogenous process equipment. For example, according to an advantageous aspect, the present invention can be used in the mining environment, where there are many uncertainties, e.g. coming from the geological qualities that are impossible to fully predict in advance (e.g. amount of material gained after a blasting cycle), equipment conditions due to extreme and varying operating environment, timing due to many manual labor steps and communication disturbances related e.g. to communication network (Wlan) coverage or functionalities of remote mobile devices.

Next, further possible variants and general aspects of the invention are described. First, more details regarding the auto-correction are described.

According to an aspect, the inconsistent data entry is defined by at least one of the received task status message and the stored process information. The inconsistent data entry may be detected, for example, by having at least one of the following characteristics:
- A missing entry in a required data;
- A data having a value out of a pre-defined range;
- A data having a value inconsistent with the stored process information or the received task status message;
- A data being outdated;
- A difference (distance) between a measured value and an actual or estimated value exceeds an acceptable difference limit.

According to an aspect, the correction rule may include correcting the correction data using at least one of
- stored historic data of the correction data;
- a statistical model for the correction data;
- a prediction rule for the correction data, the prediction rule using other data of the received task status message and the stored process information as input parameters;
- a Bayesian estimator for the correction data;
- a Kalman filter;
- an optimization system for optimizing a variable to be used as the correction data;
- a linear interpolation from values from previous tasks, the values corresponding to the correction data;
- a pre-defined default value for the correction data;
- a value within an accepted range closest to the inconsistent data entry;
- a simulation or forecasting engine for the correction data.

According to an aspect, the auto-correction module is configured for marking the correction data as auto-corrected.

According to an aspect, the auto-correction module comprises an algorithm assigner function for identifying a class of the correction data and for assigning a correction algorithms based on the class.

According to an aspect, the updater module is configured for, if the inconsistent data entry is detected, updating the process information according to the task status message after correction by the auto-correction module.

According to an aspect, the auto-correction module is adapted for generating a warning or alarm message when detecting an inconsistent data entry, e.g., any inconsistent data entry or an inconsistent data entry or a particularly severe type. For example, according to an aspect, the auto-correction module can be adapted for generating an alarm message in response to at least one of the following conditions or inconsistencies:
- machine breakdown or malperformance;
- a deviation from the original or present schedule being larger than a predetermined deviation.

Next, possible details and aspects regarding collection of process information, e.g., to be used for any one of the task status message, the stored process information and the correction data are described.

According to an aspect, the process information may include any of task status data specifying progress and completion of a task; task-related resource data regarding availability, location, amount and identification of a task-related input resource; output data regarding location, amount and identification of a task-related output product; process equipment data regarding status and availability of process equipment; timing data regarding time and duration of tasks or sub-tasks; alarm data, and the like.

Next, possible details and aspects regarding hardware and the application of the scheduling system are described. According to an aspect, the scheduling system described herein may be connected to a manufacturing execution system or Model Predictive Control system (level 3 and / or level 4). According to an aspect, an industrial system further comprises the process equipment for carrying out the plurality of tasks. The scheduling system may comprise a downlink interface for communicating the schedule generated (possibly re-scheduled) by the scheduling system to the process equipment.

According to an aspect, the up-/downlink interface may comprise a wireless network interface.

According to an aspect, the database may be a cloud database being accessed by the scheduling system through a network.

Next, possible details and aspects regarding the (re-)scheduling are described:
According to an aspect, the scheduling system comprises a scheduler module for scheduling the industrial process based on the stored process information. The scheduler module can be adapted for re-scheduling the industrial process based on the process information having been updated by the updater module and corrected by the auto-correction module, while the industrial process is being carried out. According to an aspect, the scheduling of an industrial process comprises the determining (or updating) of a process schedule defining which of the process equipment is to carry out which of the tasks at which time or under which condition.

According to an aspect, the scheduler module is adapted for being carried out in a closed loop for re-scheduling in a real-time manner. According to an aspect, a loop comprises:
- receiving a task status message from the process equipment by the first interface,
- checking at least one of the received task status message and the stored process information for an inconsistent data entry by the auto-correction module;
- correcting, if an inconsistent data entry is detected, the correction data by the auto-correction module using the correction rule;
- updating the process information stored in the database according to the received task status message; and
- computing an updated schedule for the industrial process based on the updated process information, by the scheduler module.

According to an aspect, the scheduler module is adapted for computing the updated schedule using an appropriate scheduling algorithm and optimization objective. The optimization objective may include a penalty for deviations from output parameters of the existing schedule or of an original schedule.

According to an aspect, the scheduling system comprises a downlink (second) interface for transmitting the updated schedule (which may simply consist in updated data entries or commands due to the updated schedule) to the process equipment.

According to an aspect, the scheduling system comprises queue data defining a queue being a set of tasks out of the plurality of tasks, and further defining a sequence in which the tasks of the queue are to be carried out, and a queue algorithm for dynamically calculating the starting times of the tasks of the queue.

According to an aspect, the scheduling system may include a display output, and a GUI for graphically displaying scheduling (possibly re-scheduling) functions. For example, according to an aspect, the scheduling system may comprise a user interface for allowing user manipulation of a scheduled task of a draft schedule by a user, the user interface including a draft-schedule-updater module for updating the draft schedule after the user manipulation and in accordance with the manipulated task.

While the foregoing is directed to embodiments, other and further embodiments may be devised without departing from the basic scope determined by the claims.

## Claims

1. Scheduling system (20) for scheduling an industrial process, the process comprising a plurality of tasks carried out by process equipment (10) of an industrial system (1),
the scheduling system comprising:
- a database (30) for storing process information including task status information regarding the tasks;
- a first interface (42) for receiving a task status message from the process equipment (10) relating to at least one of the tasks;
- an auto-correction module (44) configured for correcting a correction data using a correction rule, the correction data being a data of at least one of the received task status message and the stored process information; and
- an updater module (46) for updating the process information stored in the database (30) based on the task status message.

2. Scheduling system according to any one of the preceding claims, wherein
the auto-correction module (44) is configured for checking at least one of the received task status message and the stored process information for an inconsistent data entry, and for correcting the correction data if an inconsistent data entry is detected.

3. Scheduling system according to any one of the preceding claims, wherein at least one of (a) and (b):
(a) the inconsistent data entry is defined by at least one of the received task status message and the stored process information having at least one of:
- A missing entry in a required data;
- A data having a value out of a pre-defined range;
- A data having a value inconsistent with the stored process information or the received task status message;
- A data being outdated;
- A difference (distance) between a measured value and an actual or estimated value exceeds an acceptable difference limit;
(b) the correction rule includes correcting the correction data using at least one of
- stored historic data;
- a statistical model;
- a prediction rule for the correction data, the prediction rule using other data of the received task status message and the stored process information as input parameters;
- a Bayesian estimator;
- a Kalman filter;
- an optimization systems;
- a linear interpolation from values from previous tasks, the values corresponding to the correction data;
- a pre-defined default value;
- a value within an accepted range closest to the inconsistent data entry;
- a simulation or forecasting engine.

4. Scheduling system according to any one of the preceding claims, wherein
the updater module (46) is configured for, if the inconsistent data entry is detected, updating the process information according to the task status message after correction by the auto-correction module (44).

5. Scheduling system according to any one of the preceding claims, wherein
the auto-correction module (44) comprises an algorithm assigner function for identifying a class of the correction data and for assigning a correction algorithms based on the class.

6. Scheduling system according to any one of the preceding claims, wherein
the process information includes any of task status data specifying progress and completion of a task; task-related resource data regarding availability, location, amount and identification of a task-related input resource; output data regarding location, amount and identification of a task-related output product; process equipment data regarding status and availability of process equipment; timing data regarding time and duration of tasks or sub-tasks; and alarm data.

7. Scheduling system according to any one of the preceding claims, further comprising
a scheduler module (22) for scheduling the industrial process based on the stored process information, wherein the scheduler module is adapted for re-scheduling the industrial process based on the process information having been updated by the updater module (44) and corrected by the auto-correction module (46), while the industrial process is being carried out, wherein the scheduler module is adapted for being carried out in a closed loop for re-scheduling in a real-time manner.

8. Scheduling system (20) according to any one of the preceding claims, being connected to a Manufacturing execution system or a Model Predictive Control system.

9. Industrial system (1) comprising process equipment (10) for carrying out the plurality of tasks, and the scheduling system (20) according to any one of the claims 1 to 7.

10. Method of scheduling an industrial process, the industrial process comprising a plurality of tasks carried out by process equipment (10) of an industrial system (1),
the method comprising:
- receiving (S2) a task status message from the process equipment (10) relating to at least one of the tasks;
- correcting (S4, S5) a correction data using a correction rule, the correction data being a data of at least one of the received task status message and the stored process information;
- updating (S6) the stored process information based on the task status message; and
- computing (S7) an updated schedule for the industrial process based on the updated process information.

11. Method according to claim 10 , further comprising
- checking (S3) at least one of the received task status message and the stored process information for an inconsistent data entry, and
wherein the correcting (S4, S5) of the correction data is carried out if an inconsistent data entry is detected.

12. Method according to claim 10 or 11, wherein the method is carried out by a scheduling system according to any one of claims 1 to 7.
